# EUROPÄISCHE PATENTSCHRIFT

(11) **EP 0 844 128 B1**
(45) Veröffentlichungstag und Bekanntmachung des Hinweises auf die Patenterteilung: **19.12.2001**
(21) Anmeldenummer: 97119424.6
(22) Anmeldetag: 06.11.1997
(51) Int. Cl.: B60K 20/06, B62D 1/04, B60K 37/06

(54) **Lenkrad mit einer Betätigungsvorrichtung zur manuellen Steuerung von Fahrzeugeinrichtungen**
Steering Wheel with an actuating device for manual controlling of vehicle equipment
Volant avec une commande manuelle d'équipement de véhicule

(30) Priorität: 22.11.1996 DE 19648374
(43) Veröffentlichungstag der Anmeldung: 27.05.1998
(73) Patentinhaber: Volkswagen Aktiengesellschaft, 38436 Wolfsburg (DE)
(72) Erfinder: Jahn, Detlef, 38102 Braunschweig (DE); Stegmann, Ulrich, Dipl.-Ing., 38122 Braunschweig (DE)

(56) Entgegenhaltungen:
- EP-A- 0 088 953
- EP-A- 0 482 234
- EP-A- 0 519 528
- DE-A- 1 441 819
- DE-A- 2 928 951
- DE-A- 3 420 358
- DE-U- 9 320 309
- FR-A- 2 455 531
- FR-A- 2 580 561
- FR-A- 2 693 962
- US-A- 3 525 536
- US-A- 5 257 828
- US-A- 5 365 803

## Beschreibung

Die Erfindung betrifft ein Lenkrad nach dem Oberbegriff des Patentanspruches 1.

Ein derartiges Lenkrad ist beispielsweise aus der US-PS 5,257,828 bekannt.

Diese Druckschrift zeigt eine mechanische Verbindung zwischen Lenkrad und Lenkachse, nämlich durch eine vorgesehene Lenkwelle. Mit Hilfe einer die Stellung des Lenkrades einschliesslich der aktuellen Betätigungskraft erfassenden Vorrichtung wird eine Lenkkraftunterstützungseinrichtung so gesteuert, dass die Girgeschwindigkeit des Fahrzeugs optimiert ist. Allerdings ist die Anordnung von weiteren Betätigungsmitteln im Bereich des Lenkrades sowie deren Signalübertragung problematisch.

Der Erfindung liegt daher die Aufgabe zugrunde, ein verbessertes multifunktionales Lenkrad zu schaffen, bei dem die Anordnung von Betätigungsmitteln sowie deren Signalübertragung vereinfacht ist.

Diese Aufgabe wird mit den Merkmalen des Kennzeichnungsteils des Patentanspruchs 1 gelöst.

Bevorzugte Ausgestaltungen oder Weiterbildungen der Erfindung sind den Unteränsprüchen entnehmbar und werden im folgenden anhand einer der Beschreibung beigelegten Zeichnung erläutert. Im einzelnen zeigen
- Figur 1: eine schematische Darstellung eines Fahrzeuglenkrades mit zu Betätigungsgruppen zusammengefaßten Betätigungsmitteln,
- Figur 2: ein Lenkrad mit Lenkradkranzausbuchtungen, in denen die Betätigungsmittel angeordnet sind,
- Figur 3: eine Darstellung wie Figur 2, jedoch mit einem homförmigen Lenkradkranz sowie Betätigungsmittelaufsatzstücken.
- Figur 4: eine schematische Darstellung der Anordnung der Betätigungsmittel samt ihrer zu einem Mikrocomputer führenden Signalleitungen im Lenkrad,
- Figur 5: einen Querschnitt durch ein Lenkradkranz mit darin angeordneten Betätigungsmitteln, sowie
- Figur 6: eine schematische Darstellung von mit den Lenkradbetätigungsmitteln ansteuerbaren Fahrzeugeinrichtungen.

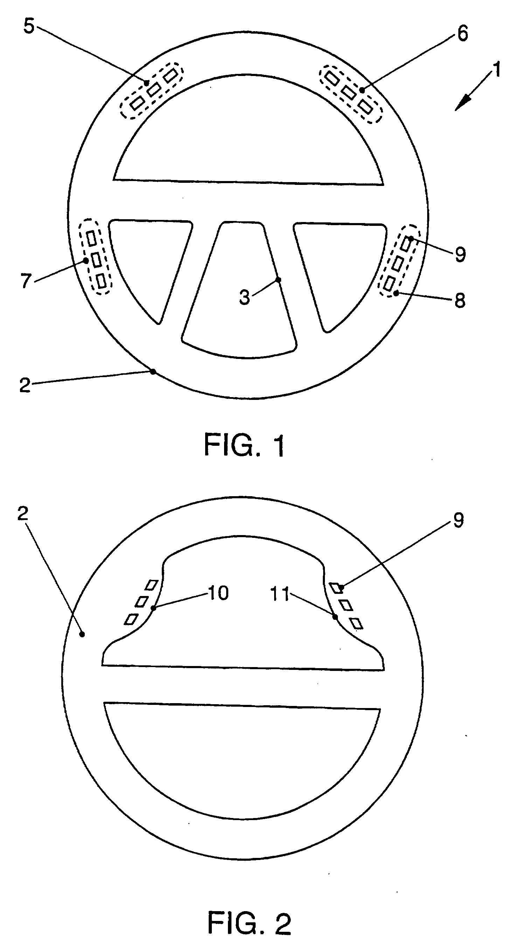

Wie Figur 1 entnehmbar ist, sind die Betätigungsmittel zur Betätigung unterschiedlicher elektrischer und/oder mechanischer Einrichtungen am Fahrzeug am Lenkradkranz 2 des Lenkrades 1 anzuordnen. Dabei kann vorzugsweise vorgesehen sein, daß die Betätigungsmittel 9 zu Betätigungsgruppen 6 bis 8 zusammengefaßt und in einer speziellen Ausführungsform in wenigstens einem der vier Lenkradquadranten angeordnet sind.

Wie eingehende Untersuchungen an einer solchen Betätigungsmittelanordnung gezeigt haben, wirkt diese auf einen Fahrer beim Lenken des Fahrzeuges mit einem solchen Lenkrad nicht störend. Bei versenkt in der Lenkradpolsterung angeordneten Betätigungsmitteln 9 läßt sich auch sicherstellen, daß die Betätigung der genannten Fahrzeugeinrichtungen nicht versehentlich geschieht. Diese ergonometrisch wesentlich günstigere Anordnung als beim Stand der Technik erlaubt mittels ungestreckter Finger oder Daumen eine Bedienung der Betätigungsmittel.

In einer bevorzugten Ausführungsform sind die Betätigungsmittel 9 in Ausbuchtungen 10, 11 am Lenkradkranz 2 angeordnet, die weiter vorzugsweise etwa radial nach innen zur Lenkraddrehachse weisen. Auch hier kann vorgesehen sein, daß die Betätigungsmittel zu Betätigungsmittelgruppen zusammengefaßt sind.

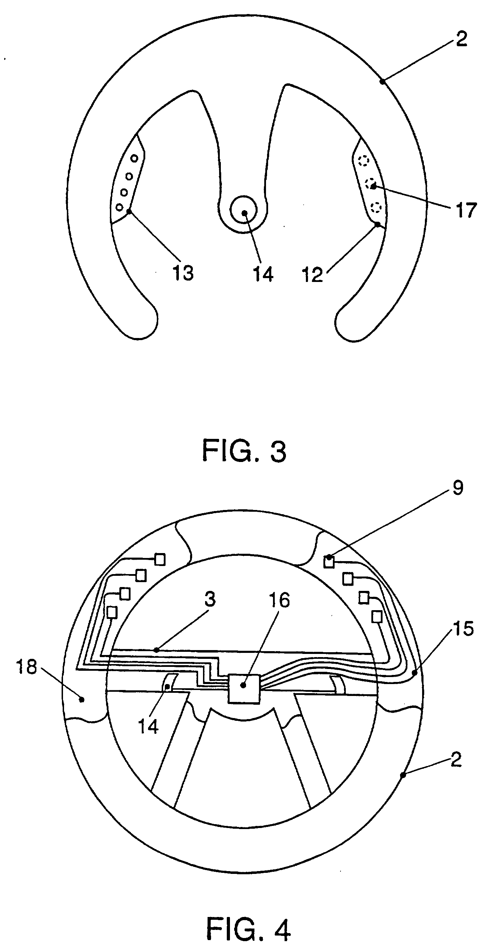

Figur 3 zeigt ein etwa hornförmiges Lenkrad, bei dem die Betätigungsmittel in Lenkradaufsatzstücken 12, 13 angeordnet und am Lenkradkranz 2 befestigt sind. Wie an dem Aufsatzstück 12 erkennbar ist, kann auch vorgesehen sein, daß die Betätigungsmittel 17 in der vom Fahrer wegweisenden Richtung angeordnet sind, so daß sie nicht mit dem Daumen, sondern mit den Fingern der Fahrzeugführerhand betätigbar sind.

In Figur 4 wird die Anordnung der Betätigungsmittel 9 sowie die Leitungsführung der Signalleitungen 15 zu einem im Bereich der Lenkradachse angeordneten Mikrocomputer 16 in einem im Bereich des Lenkradkranzpolsters aufgeschnitten dargestellten Lenkrades gezeigt. Zusätzlich ist in diesem Ausführungsbeispiel zu sehen, daß auch in einer Lenkradspeiche 3 angeordnete Betätigungsmittel für eine Fahrzeughupe mit ihren Signalleitungen mit dem Mikrocomputer 16 verbunden sind. Dieser Mikrocomputer 16 führt mittels einer oder mehrerer Steuerleitungen 33 zu den zu betätigenden Fahrzeugeinrichtungen. In anderen Ausführungsformen der Erfindung können die Steuersignale auch über Schleifkontakte an der Lenksäule zu nicht mit dem Lenkrad mitbeweglichen Leitungen weitergeführt oder drahtlos übertragen werden.

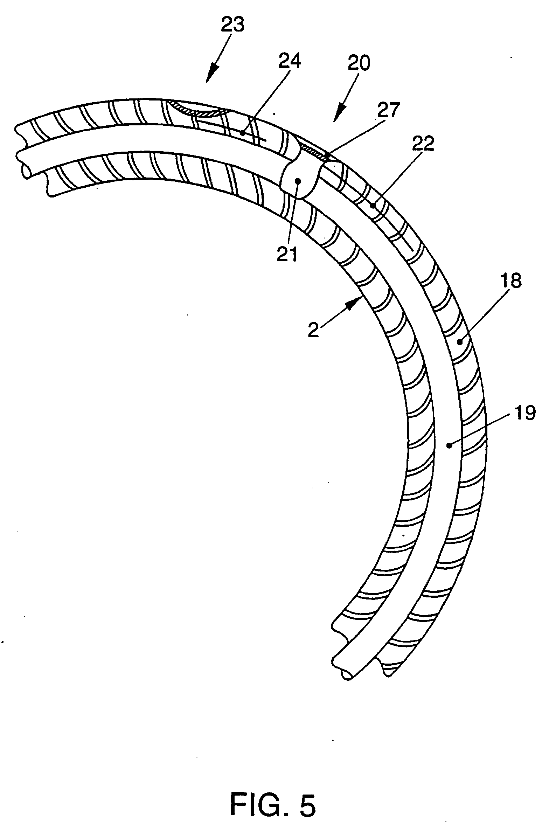

In Figur 5 ist in einer schematischen Schnittbilddarstellung die Anordnung von zwei Betätigungsmitteln 20, 23 am Lenkradkranz 2 dargestellt. Dieser Lenkradkranz 2 besteht in an sich bekannter Weise aus einer vorzugsweise stählernen Lenkradkranzseele 19, die mit einem vorzugsweise gummielastischen Polstermaterial 18 umspannt ist. In dieses Polstermaterial 18 sind die Betätigungsmittel 20, 23 derart oberflächenbündig eingepaßt, daß eine versehentliche Betätigung durch den Fahrzeugführer beim Auslenken des Lenkrades ausgeschlossen werden kann. Zur Orientierung des Fahrers können Tastmulden 27 in die Oberfläche des Lenkradpolsters 18 eingearbeitet sein, an deren Grund der eigentliche Schaltkontakt der jeweiligen Betätigungselemente 20, 23 angeordnet ist. Wie dieser Abbildung zudem zu entnehmen ist, können die Betätigungsmittel 20, 23 auch radial nach außen weisen.

Das Betätigungselement 20 selbst ist in dem hier dargestellten Ausführungsbeispiel mit Hilfe einer Haltevorrichtung 21 an der Lenkradkranzseele 19 befestigt, so daß das Betätigungsmittel 20 bei der Herstellung eines kompletten Fahrzeuglenkrades beim Aufbringen des Lenkradpolsters 18 nicht in seiner Position verrutschen kann.

Bei dem mit 23 gekennzeichneten Betätigungsmittel handelt es sich um einen Drucksensor, der bei der Herstellung des Lenkrades in die Herstellungsvorrichtung eingelegt und dann anschließend mit dem Polstermaterial vor dessen Verfestigung an der Betätigungsmittelrückseite umschäumt wird. Die Signalleitungen 22, 24 der Betätigungsmittel 20, 23 sind in dieser Darstellung nur ansatzweise gezeigt.

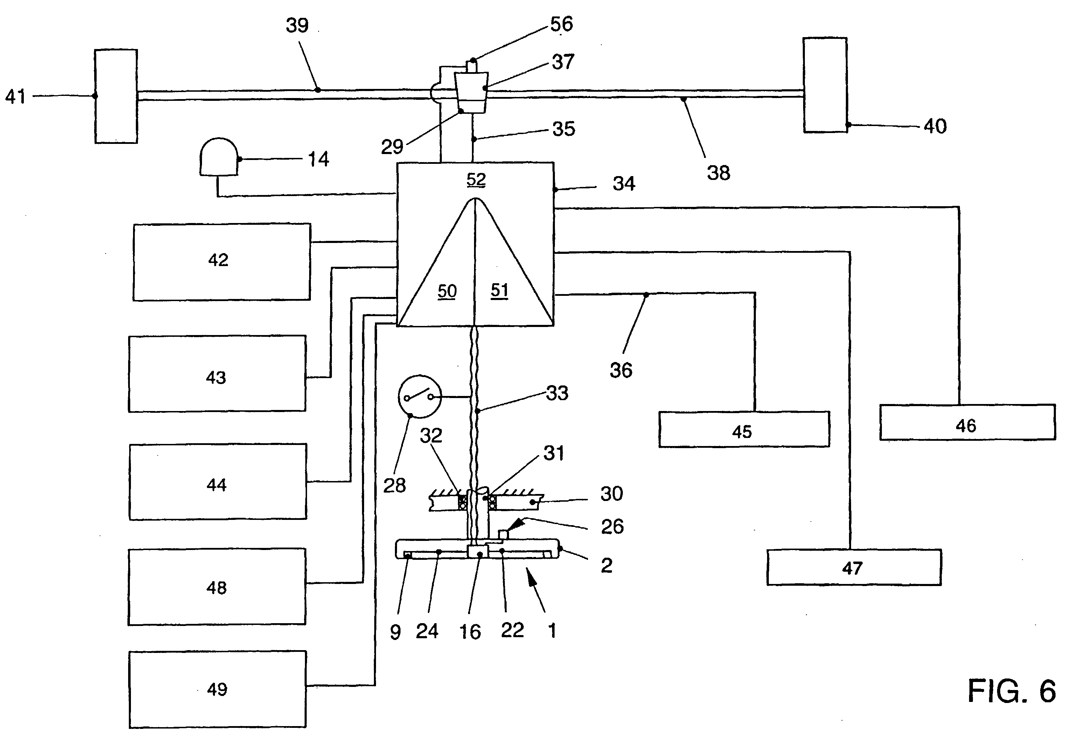

Schließlich ist in Figur 6 schematisch dargestellt, wie die Betätigungsmittel 9 im Lenkradkranz 2 mittels ihrer Signalleitungen 22, 24 mit dem genannten Mikrocomputer 16 im Lenkrad verbunden sind. Zusätzlich ist mit 26 auch noch ein Lenkwinkelsensor bezeichnet, dessen Sensorsignal ebenfalls an den Computer 16 weitergeleitet wird. Wie in Figur 6 dargestellt, ist vorgesehen, daß das Lenkrad 1 nur über einen Lenkwellenstumpf 31 verfügt, der mittels eines Lagers 32 in einem Karosserieteil 30 gelagert ist. Hier wird das Lenkgetriebe 37 mit seinem Lenkaktuator 29 nur aufgrund von Stellsignalen elektrisch oder hydraulisch angetrieben.

Mit Hilfe des schon beschriebenen Computers 16 im Lenkrad kann die Anzahl der aus dem drehenden System Lenkrad herauszuführenden Leitungen 33 reduziert und eine Vorverarbeitung der Signalinformationen am Entstehungsort erfolgen.

In eine weiteren Variante, bei der sicherheitsrelevante Informationen oder Steuerbefehle aus dem Lenkrad 1 an andere Fahrzeugeinrichtungen weiterzugeben sind, kann gemäß Figur 6 auch vorgesehen sein, daß die Betätigungsmittel 9, der Mikrocomputer 16 und/oder der Lenkwinkelsensor 26 mit einem weiteren Computer 34 in Verbindung stehen, der über mehrer elektronische Prozessoren mit jeweils zugeordneten Entscheidungshirachien verfügt. So kann der Computer 34 gleichberechtigt arbeitende Prozessoren 50, 51 aufweisen, die parallel zueinander alle Betätigungssignale für die Fahrzeugeinrichtungen 42 bis 49 erhalten und aus Sicherheitsgründen dise Signale gleichzeitig und voneinander unabhängig verarbeiten. Der dritte Prozessor 52 überprüft die Verarbeitungsergebnisse der Prozessoren 50, 51 mit den eigenen Ergebnissen und entscheidet nach dem Mehrheitsprinzip unter Berücksichtigung von Plausibilitätskontrollen über die Richtigkeit der Signale und Verarbeitungsergebnisse und leitet die Betätigungssignale und/oder das Lenksignal an die Fahrzeugeinrichtungen bzw. an den Aktuator 29 für das Lenkgetriebe 37 weiter. Da sich nach einer Kurvenfahrt die gelenkten Fahrzeugräder 40, 41 in der Regel selbst in Richtung Geradeauslauf zurückstellen, ist zusätzlich zur Erfassung des tatsächlichen Lenkwinkels noch ein Sensor 56 im Bereich der Lenkung 29, 37 - 41 vorgesehen, der mit dem Computer 37 über eine Signalleitung verbunden ist.

Zu den in Figur 6 zum Teil dargestellten und betätigbaren Fahrzeugeinrichtungen gehört ein Automatikgetriebe 42, eine Heckscheibenheizung 43, ein Navigationsgerät, die Fahrzeugbeleuchtung 44, eine Klimaanlage 45, ein Radio 46, Fahrtrichtungsanzeiger 47, Scheibenwischer 48, Fensterheber 49, eine Fahrzeughupe 14 und ein Lenkaktuator 29. Zusätzlich kann vorgesehen sein, daß weitere Betätigungsmittel, wie hier durch den Schalter 28 angedeutet, außerhalb des Lenkrades 1 angeordnet sind. Bei der Ansteuerung des Automatikgetriebes 42 kann insbesondere vorgesehen sein, daß dessen Gänge und/oder Fahrstufen bzw. Fahrprogramme manuell und/oder sequentiell mittels der Betätigungsmittel 9 steuerbar sind.

## Patentansprüche

1. Lenkrad (1) mit einem Lenkwinkelsensor und einer Betätigungsvorrichtung zur manuellen Steuerung von Funktionen elektrischer oder mechanischer Einrichtungen in einem Fahrzeug, wobei Betätigungsmittel (9, 14, 17, 20, 23) im Bereich des um eine Achse drehbar lagerbaren und manuell betätigbaren Fahrzeuglenkrades (1) angeordnet sind, und wobei durch Drehen des Lenkrades (1) der Fahrtrichtungswunsch des Fahrers auf eine Radlenkvorrichtung des Fahrzeuges übertragbar ist, **dadurch gekennzeichnet, daß** das Lenkrad (1) einen im Karosserieteil (30) lagerbaren Lenkwellenstumpf (31) aufweist, daß am Lenkrad (1) der Lenkwinkelsensor (26) angeordnet ist, daß der Lenkwinkelsensor (26) und die Betätigungsmittel (9, 14, 17, 20, 23) mit einem Mikrocomputer (16) über Signalleitungen in Verbindung stehen, daß der Mikrocomputer (16) im Lenkrad (1) angeordnet ist, daß die über eine Signalleitung (33) übertragenen Signale des Lenkwinkelsensors (26) als Steuersignale zur Steuerung eines Lenkaktuators (29) am Lenkgetriebe (37) dienen und daß die Betätigungsmittel (9, 14, 17, 20, 23) über eine Signalleitung (33) oder mittels Funksender und Funkempfänger mit den zu betätigenden Fahrzeugeinrichtungen (42 bis 49) in Verbindung stehen.

2. Lenkrad nach Anspruch 1, **dadurch gekennzeichnet, daß** die Betätigungsmittel (9) in Lenkradausbuchtungen (10, 11) angeordnet sind.

3. Lenkrad nach Anspruch 2, **dadurch gekennzeichnet, daß** die Lenkradausbuchtungen (10, 11) am Lenkradkranz (2) im wesentlichen radial nach innen weisend angeordnet sind.

4. Lenkrad nach einem oder mehreren der Ansprüche 1 bis 3, **dadurch gekennzeichnet, daß** die Betätigungsmittel zu Betätigungsgruppen (6 bis 8) zusammengefaßt sind.

5. Lenkrad nach Anspruch 4, **dadurch gekennzeichnet, daß** wenigstens eine der Betätigungsgruppen (6 bis 8) in wenigstens einem Lenkradquadranten angeordnet ist.

6. Lenkrad nach einem oder mehreren der Ansprüche 1 bis 5, **dadurch gekennzeichnet, daß** die Betätigungsmittel (9) in am Lenkradkranz (2) befestigten Aufsatzstücken (12, 13) angeordnet sind.

7. Lenkrad nach einem oder mehreren der Ansprüche 1 bis 6, **dadurch gekennzeichnet, daß** die Betätigungsmittel (9, 20, 23) im Lenkradkranzpolster (18) oberflächenbündig versenkt angeordnet sind.

8. Lenkrad nach einem oder mehreren der Ansprüche 1 bis 7, **dadurch gekennzeichnet, daß** die Betätigungsmittel (9) als Drucktasten (20) und/oder als Drucksensoren (23) ausgebildet sind.

9. Lenkrad nach Anspruch 8, **dadurch gekennzeichnet, daß** die Betätigungsmittel (20) mittels einer Haltevorrichtung (21) an der Lenkradkranzseele (19) befestigt sind.

10. Lenkrad nach einem oder mehreren der Ansprüche 1 bis 9, **dadurch gekennzeichnet, daß** die Betätigungsmittel (23) in das Lenkradpolstermaterial (18) oberflächenbündig samt deren Signalleitungen eingegossen sind.

11. Lenkrad nach einem oder mehreren der Ansprüche 1 bis 10, **dadurch gekennzeichnet, daß** die Betätigungsmittel (9, 14, 20, 23) vorzugsweise zu dem Fahrer weisen.

12. Lenkrad nach einem oder mehreren der Ansprüche 1 bis 11, **dadurch gekennzeichnet, daß** mit den Betätigungsmitteln (9, 17, 20, 23) ein Automatikgetriebe (42) zur Ansteuerung der Fahrstufen (P, R, N, D, D3, D2, D1) ansteuerbar ist.

13. Lenkrad nach einem oder mehreren der Ansprüche 1 bis 12, **dadurch gekennzeichnet, daß** mit den Betätigungsmitteln (9, 17, 20, 23) ein Automatikgetriebe (42) manuell und/oder sequentiell in bestimmte Übersetzungsstufen schaltbar ist.

14. Lenkrad nach einem oder mehreren der Ansprüche 1 bis 13, **dadurch gekennzeichnet, daß** mit den Betätigungsmitteln (9, 17, 20, 23) manuell und/oder sequentiell bestimmte Getriebe-Fahrprogramme wählbar sind.

15. Lenkrad nach einem oder mehreren der Ansprüche 1 bis 11, **dadurch gekennzeichnet, daß** mit den Betätigungsmitteln (9, 14, 17, 20, 23) eine Fahrzeughupe (14), eine Heckscheibenheizung (43), die Fahrzeugbeleuchtung (44), ein Navigationsgerät, eine Klimaanlage (45), eine Audioeinrichtung (46), ein Fahrtrichtungsanzeiger (47), ein Scheibenwischer (48) und/oder elektrische Fensterheber (49) betätigbar sind.

16. Lenkrad nach einem oder mehreren der Ansprüche 1 bis 15, **dadurch gekennzeichnet, daß** die Betätigungsmittel (9, 14, 17, 20, 23) sowie Lenkwinkelsensoren (26, 56) über den Mikrocomputer (16) mit einem Computer (34) außerhalb des Lenkrads (1) in Verbindung stehen.

17. Lenkrad nach Anspruch 16, **dadurch gekennzeichnet, daß** der Computer (34) über mehrere elektronische Prozessoren (50 - 52) verfügt, die die empfangenen Betätigungssignale parallel verarbeiten.

18. Lenkrad nach Anspruch 16 - 17, **dadurch gekennzeichnet, daß** mit Hilfe eines der Prozessoren (52) die Steuerungsbefehle der anderen Prozessoren (50, 51) überprüfbar sind und im Sinne einer plausibilitätsüberprüften Mehrheitsentscheidung die letztlich gültigen Steuerungsbefehle an die Fahrzeugeinrichtungen (14, 29, 42 - 49) weiterleitbar sind.

19. Lenkrad nach Anspruch 18, **dadurch gekennzeichnet, daß** mittels des Computers (34) Lenksignale über eine Steuerleitung (35) an einen Lenkaktuator (29) am Lenkgetriebe (37) signalisierbar sind.

## Claims

1. Steering wheel (1) having a steering angle sensor and an activation device for manually controlling functions of electrical or mechanical devices in a vehicle, activation means (9, 14, 17, 20, 23) being arranged in the region of the vehicle steering wheel (1) which can be mounted so as to rotate about an axis and can be activated manually, and it being possible for the driving direction requirement of the driver to be transmitted to a wheel-steering apparatus of the vehicle by rotating the steering wheel (1), **characterized in that** the steering wheel (1) has a steering shaft stop (31) which can be mounted in the body component (30), **in that** the steering angle sensor (26) is arranged on the steering wheel (1), **in that** the steering angle sensor (26) and the activation means (9, 14, 17, 20, 23) are connected to a microcomputer (16) via signalling lines, **in that** the microcomputer (16) is arranged in the steering wheel (1), **in that** the signals, transmitted via a signal line (23), of the steering angle sensor (26) serve as control signals for controlling a steering actuator (29) on the steering gear (37), and **in that** the activation means (9, 14, 17, 20, 23) are connected via a signal line (33) or by means of a radio transmitter and a radio receiver to the vehicle devices which are to be activated.

2. Steering wheel according to Claim 1, **characterized in that** the activation means (9) are arranged in steering wheel recesses (10, 11).

3. Steering wheel according to Claim 2, **characterized in that** the steering wheel recesses (10, 11) are arranged pointing essentially radially inwards on the steering-wheel rim (2).

4. Steering wheel according to one or more of Claims 1 to 3, **characterized in that** the activation means are combined to form activation groups (6 to 8).

5. Steering wheel according to Claim 4, **characterized in that** at least one of the activation groups (6 to 8) is arranged in at least one steering wheel quadrant.

6. Steering wheel according to one or more of Claims 1 to 5, **characterized in that** the activation means (9) are arranged in projecting elements (12, 13) attached to the steering wheel rim (2).

7. Steering wheel according to one or more of Claims 1 to 6, **characterized in that** the activation means (9, 20, 23) are arranged countersunk flush with the surface in the steering wheel rim padding (18).

8. Steering wheel according to one or more of Claims 1 to 7, **characterized in that** the activation means (9) are embodied as pushbutton keys (20) and/or as pressure sensors (23),

9. Steering wheel according to Claim 8, **characterized in that** the activation means (20) are attached to the steering wheel core (19) by means of a securing device (21).

10. Steering wheel according to one or more of Claims 1 to 9, **characterized in that** the activation means (23) are cast, together with their signal lines, into the steering wheel padding material (8) flush with the surface.

11. Steering wheel according to one or more of Claims 1 to 10, **characterized in that** the activation means (9, 14, 20, 23) preferably point to the driver.

12. Steering wheel according to one or more of Claims 1 to 11, **characterized in that** an automatic gearbox (42) for actuating the gear speeds (P, R, N, D, D3, D2, D1) can be actuated with the activation means (9, 17, 20, 23).

13. Steering wheel according to one or more of Claims 1 to 12, **characterized in that** an automatic gearbox (42) can be shifted manually and/or sequentially into specific transmission speeds using the activation means (9, 17, 20, 23).

14. Steering wheel according to one or more of Claims 1 to 13, **characterized in that** gearbox travel programs which are determined manually and/or sequentially can be selected using the activation means (9, 17, 20, 23).

15. Steering wheel according to one or more of Claims 1 to 11, **characterized in that** a vehicle horn (14), a rear window heater (43), the vehicle lighting system (44), a navigation device, an air conditioning system (45), an audio device (46), a travel direction indicator (47), a windscreen wiper (48) and/or electric window lifters (49) can be activated using the activation means (9, 14, 17, 20, 23).

16. Steering wheel according to one or more of Claims 1 to 15, **characterized in that** the activation means (9, 14, 17, 20, 23) and steering angle sensors (26, 56) are connected via the microcomputer (16) to a computer (34) outside the steering wheel (1).

17. Steering wheel according to Claim 16, **characterized in that** the computer (34) has a plurality of electronic processors (50-52) which process the received activation signals in parallel.

18. Steering wheel according to Claims 16 to 17, **characterized in that** one of the processors (52) can be used to check the control instructions of the other processors (50, 51), and the ultimately valid controlled instructions can be passed on to the vehicle devices (14, 29, 42-49) as a plausibility-checked majority decision.

19. Steering wheel according to Claim 18, **characterized in that** steering signals can be signalled via a control line (35) to a steering actuator (29) on the steering gear (37) by means of the computer (34).

## Revendications

1. Volant (1) avec un détecteur d'angle de braquage et un dispositif de commande pour la commande manuelle de fonctions d'équipements électriques ou mécaniques dans un véhicule, dans lequel des moyens de commande (9, 14, 17, 20, 23) sont disposés dans la région du volant de véhicule (1) pouvant tourner autour d'un axe et pouvant être manoeuvré à la main, et dans lequel le souhait de la direction de circulation du conducteur peut être transmis à un dispositif de braquage des roues du véhicule en faisant tourner le volant (1), **caractérisé en ce que** le volant (1) présente un bout d'arbre de direction (31) pouvant être appuyé dans une pièce de carrosserie (30), **en ce que** le détecteur d'angle de braquage (26) est disposé sur le volant (1), **en ce que** le détecteur d'angle de braquage (26) et les moyens de commande (9, 14, 17, 20, 23) sont en liaison avec un micro-ordinateur (16) par des lignes de signalisation, **en ce que** le micro-ordinateur (16) est disposé dans le volant (1), **en ce que** les signaux transmis par le détecteur d'angle de braquage (26) via une ligne de signalisation (33) servent de signaux de commande pour la commande d'un vérin de braquage (29) sur le mécanisme de direction (37) et **en ce que** les moyens de commande (9, 14, 17, 20, 23) sont en liaison avec les équipements de véhicule (42 à 49) à commander via une ligne de signalisation (33) ou au moyen d'émetteurs et de récepteurs radio.

2. Volant suivant la revendication 1, **caractérisé en ce que** les moyens de commande (9) sont disposés dans des renflements (10, 11) du volant.

3. Volant suivant la revendication 2, **caractérisé en ce que** les renflements (10, 11) du volant sont disposés sur la couronne du volant (2) en position sensiblement radiale vers l'intérieur.

4. Volant suivant une ou plusieurs des revendications 1 à 3, **caractérisé en ce que** les moyens de commande sont rassemblés en groupes de commande (6 à 8).

5. Volant suivant la revendication 4, **caractérisé en ce qu'**au moins un des groupes de commande (6 à 8) est disposé dans au moins un quadrant du volant.

6. Volant suivant une ou plusieurs des revendications 1 à 5, **caractérisé en ce que** les moyens de commande (9) sont disposés dans des pièces rapportées (12, 13) fixées à la couronne du volant (2).

7. Volant suivant une ou plusieurs des revendications 1 à 6, **caractérisé en ce que** les moyens de commande (9, 20, 23) sont disposés dans l'habillage (18) de la couronne du volant en position enfoncée au niveau de la surface.

8. Volant suivant une ou plusieurs des revendications 1 à 7, **caractérisé en ce que** les moyens de commande (9) sont des boutons-poussoirs (20) et/ou des détecteurs de pression (23).

9. Volant suivant la revendication 8, **caractérisé en ce que** les moyens de commande (20) sont fixés à l'âme (19) de la couronne du volant au moyen d'un dispositif de support (21).

10. Volant suivant une ou plusieurs des revendications 1 à 9, **caractérisé en ce que** les moyens de commande (23) sont noyés dans le matériau (18) de l'habillage du volant au niveau de la surface, avec leurs lignes de signalisation.

11. Volant suivant une ou plusieurs des revendications 1 à 10, **caractérisé en ce que** les moyens de commande (9, 14, 20, 23) sont de préférence orientés vers le conducteur.

12. Volant suivant une ou plusieurs des revendications 1 à 11, **caractérisé en ce qu'**une boîte de vitesses automatique (42) pour activer les positions de marche (P, R, N, D, D3, D2, D1) peut être actionnée avec les moyens de commande (9, 17, 20, 23).

13. Volant suivant une ou plusieurs des revendications 1 à 12, **caractérisé en ce qu'**une boîte de vitesses automatique (42) peut être enclenchée manuellement et/ou séquentiellement à des rapports de transmission déterminés avec les moyens de commande (9, 17, 20, 23).

14. Volant suivant une ou plusieurs des revendications 1 à 13, **caractérisé en ce que** des programmes de marche déterminés de la boîte de vitesses peuvent être sélectionnés manuellement et/ou séquentiellement avec les moyens de commande (9, 17, 20, 23).

15. Volant suivant une ou plusieurs des revendications 1 à 11, **caractérisé en ce qu'**un avertisseur de véhicule (14), le chauffage de la lucarne arrière (43), l'éclairage du véhicule (44), un appareil de navigation, une installation de climatisation (45), une installation audio (46), un indicateur de route (47), un essuie-glaces (48) et/ou des vitres à ouverture électrique (49) peuvent être actionnés avec les moyens de commande (9, 14, 17, 20, 23).

16. Volant suivant une ou plusieurs des revendications 1 à 15, **caractérisé en ce que** les moyens de commande (9, 14, 17, 20, 23) ainsi que des détecteurs d'angle de braquage (26, 56) sont en liaison avec un ordinateur (34) à l'extérieur du volant (1) via le micro-ordinateur (16).

17. Volant suivant la revendication 16, **caractérisé en ce que** l'ordinateur (34) est équipé de plusieurs processeurs électroniques (50 - 52), qui traitent en parallèle les signaux de commande reçus.

18. Volant suivant les revendications 16 - 17, **caractérisé en ce qu'**un des processeurs (52) permet de contrôler les instructions de commande des autres processeurs (50, 51) et **en ce que** les instructions de commande finalement validées au sens d'une décision majoritaire de contrôle de plausibilité peuvent être transmises aux équipements (14, 29, 42 - 49) du véhicule.

19. Volant suivant la revendication 18, **caractérisé en ce que** des signaux de braquage peuvent être signalés à un vérin de direction (29) sur le mécanisme de direction (37) au moyen de l'ordinateur (34), via une ligne de signalisation (35).
